# EUROPEAN PATENT SPECIFICATION

(11) **EP 2 431 643 B1**
(45) Date of publication and mention of the grant of the patent: **01.05.2013**
(21) Application number: 11179489.7
(22) Date of filing: 31.08.2011
(51) Int. Cl.: F16L 11/04

(54) **Method and apparatus for the surface treatment of collapsible tubular sub-layers intended for the production of multy-layer tubes**
Verfahren und Vorrichtung zur Oberflächenbehandlung von zusammenklappbaren rohrförmigen Unterschichten zur Herstellung von mehrschichtigen Rohren
Procédé et appareil pour le traitement de surface de sous-couches tubulaires pliables afin de produire des tubes à plusieurs couches

(30) Priority: 16.09.2010 IT VR20100181
(43) Date of publication of application: 21.03.2012
(73) Proprietor: MANIFATTURA TUBI GOMMA S.p.A., 36040 Grisignano di Zocco (Vicenza) (IT)
(72) Inventor: MARCOLIN, DAVIDE, 36040 GRISIGNANO DI ZOCCO (VICENZA) (IT)
(74) Representative: Ponchiroli, Simone

(56) References cited:
- DE-A1- 4 125 941
- JP-A- 59 166 536
- JP-A- 61 035 235
- JP-A- 62 207 339
- US-A- 4 718 907
- US-A1- 2008 251 966
- US-A1- 2009 092 763
- US-B1- 6 602 565
- KAPLAN S L ET AL: "GAS PLASMA TECHNOLOGY AND ITS APPLICATIONS", GAS PLASMA TECHNOLOGY AND ITS APPLICATIONS, XX, XX, 1 March 1987 (1987-03-01), pages 1-22,ABSTRA, XP002920501,
- "DYNE-A-MITE SOLVES ADHESION PROBLEMS", PROMOTIONAL BROCHURE FROM ENERCON INDUSTRIES CORCOPATION, XX, XX, 2 June 1998 (1998-06-02), XP002920500,

## Description

This invention relates to a method and an apparatus for the surface treatment of collapsible tubular liners which are intended for the production of multi-layer tubes.

In particular, this invention is aimed at the sector for the production of multi-layer tubes on a mandrel with a liner at least partly made of fluorinated material. The production of tubes on a mandrel requires the liner, previously obtained by extrusion, to be mounted on a rotary mandrel and covered by wrapping it in the materials which are intended to form the other layers. At the end of the wrapping of the various layers, the tube is subjected to a polymerisation process which causes the compacting of all of the layers. One of the worst problems in this sector is that of guaranteeing adhesion between the liner and the layer which covers it. Indeed, the at least partly fluorinated materials, have high performance as regards chemical inertia, resistance to temperature, surface specularity (low wettability), impermeability and adhesion (poor) to other materials, which make them suitable for the production of liners of tubes which are intended to convey sterile and/or highly aggressive fluids. However, their poor adhesion to other materials is the main defect during production of the tube, since it is practically impossible to obtain adhesion to the layer covering them, particularly if it is rubber-based.

Consequently, over the years, various methods were developed for the surface treatment of fluorinated materials with the aim of attempting to modify the surface molecular structure of the liners to therefore allow other layers to adhere to them.

A first known technology involves chemical treatment of the surface of the liner with alkaline metals (usually sodium) in various conditions (for sublimation, in a solution of ammonia or naphthalene and/or other solvents), for example as described in patent EP 1 450 092 by this Applicant. With that type of treatment surface changes are obtained which allow the adhesion of other layers made of polymeric material either with or without the use of a primer.

However, this known technology has the disadvantage of requiring the use of substances which are highly toxic and polluting, which involve both safety risks for the working environment and the need for careful (and expensive) waste disposal. However, even the adhesion which can be obtained is not always optimum, since in particularly hostile operating environments the liner may even become detached from the other layers.

Therefore, in an attempt to find an alternative to chemical treatment, over the years plasma treatments of fluorinated materials have also been provided.

A first example of this type is described in patent US RE 38,087E relating to the production of fuel hoses, and which involves treatment of the fluorinated surface of the liner using plasma with inert gases such as argon and nitrogen. According to that patent, the aim of the treatment is to substitute part of the fluorine atoms present on the surface of the liner with a specific quantity of oxygen atoms. In this way, it is possible to hot extrude a covering layer (thermoplastic resin- or rubber-based) directly on the liner obtaining good adhesion. However, that technology does not involve covering the liner by working on a mandrel.

Similar results are also obtained in patent EP 185 590, as well as with plasma treatments with oxygen and/or its mixtures with a minimum content of 10% (patent EP 190 334).

Patent US 6,602,565 B1 discloses a method for the surface treatment of tubular liners which are intended for the production of multilayer tubes, wherein the method comprises the operating steps of: forming a tubular liner made of at least party fluorinated material on a rigid or semi-rigid core, feeding the liner axially, in a direction of feed extending through a plasma treatment unit equipped with a plurality of electrodes arranged radially around the direction of feed, starting with its first end and its entire surface to be treated has passed through said treatment unit, at the same time keeping the treatment units active for plasma treatment of the surface of the liner and creating a vacuum in the plasma treatment unit.

Patent US 6,602,565 B1 further discloses an apparatus for the surface treatment of collapsible tubular liners intended for the production of multi-layer tubes, wherein the apparatus comprises a rigid core, a plasma treatment unit through which the liner to be treated can be fed with the core in the liner, means for feeding the liner with the core in the liner though the plasma treatment unit in a direction of feed, and means for creating a vacuum in the plasma treatment unit.

A further development in the plasma technique is described in patent application EP 1860140 by this Applicant. According to that patent application, the plasma treatment is carried out in such a way as to modify the outer surface of the liner so that at the end of the treatment, compared with the unchanged perfluorinated material, it has a reduced quantity of fluorine F atoms, as well as the appearance of a distribution of hydrogen atoms and/or nitrogen atoms, although the quantity of oxygen atoms remains constant.

According to that patent, the plasma treatment could be carried out either in a vacuum or in a gaseous atmosphere.

Although the technique described in that patent application provided good results regarding adhesion between the liner and the other layers, subsequent tests carried out by the Applicant at industrial level revealed some limits, in particular relating to repeatability of the result on relatively long stretches of liner which required a surface treatment carried out continuously as the liner was fed through one or more plasma treatment units.

Various tests carried out either in a gaseous atmosphere or in a vacuum have shown how in many cases the liner (which usually has a quite thin wall, making it both flexible and collapsible on itself) was subject to deformations, especially localised swellings.

In this context, the technical purpose which forms the basis of this invention is to provide a method and an apparatus for the surface treatment of collapsible tubular liners which are intended for the production of multi-layer tubes, which overcomes the above-mentioned disadvantages.

In particular, the technical purpose of this invention is to provide a method and an apparatus for the surface treatment of collapsible tubular liners which are intended for the production of multi-layer tubes which allows an increase in the capacity of the surface of the liner to adhere to other materials, without the risks of deforming the liner during the treatment.

The technical purpose specified and the aims indicated are substantially achieved by a method and an apparatus for the surface treatment of collapsible tubular liners which are intended for the production of multi-layer tubes as described in the appended claims 1 and 10 respectively.

Further features and the advantages of this invention are more apparent in the detailed description, with reference to the accompanying drawings which illustrate several preferred, non-limiting embodiments of a method and an apparatus for the surface treatment of collapsible tubular liners which are intended for the production of multi-layer tubes, in which:
- Figure 1 is a schematic view of an apparatus made according to this invention;
- Figure 2 is a schematic view, partly in cross-section and with some parts cut away, of the apparatus of Figure 1 in which a liner to be treated is inserted in a first position preceding treatment;
- Figures 3 and 4 show the apparatus of Figure 2 with the liner in two successive positions during the treatment;
- Figure 5 is a more detailed view, partly in cross-section, of the apparatus and the liner at the detail V of Figure 2; and
- Figure 6 is a schematic cross-section across the direction of feed of the liner, of a detail of the apparatus of Figure 1, with the liner inserted.

With reference to the accompanying drawings, the numeral 1 denotes in its entirety a collapsible tubular liner which is intended for the production of multi-layer tubes, having a first end 2 and a second end 3.

The surface treatment method according to this invention comprises first taking a collapsible tubular liner 1 made of at least partly fluorinated material (this invention is particularly advantageous in the case of the materials which are the most difficult to treat, that is to say, manly perfluorinated materials). Before starting treatment of the liner 1, this invention comprises inserting in the liner a rigid or semi-rigid core 4 which is substantially shaped to match the liner. The aim of the core 4 is to prevent the liner 1 from collapsing during the subsequent plasma treatment, as described in more detail below. According to the method provided by the Applicant, the liner 1 is then axially fed, starting with its first end 2, in a direction of feed extending through one or more plasma treatment units 5.

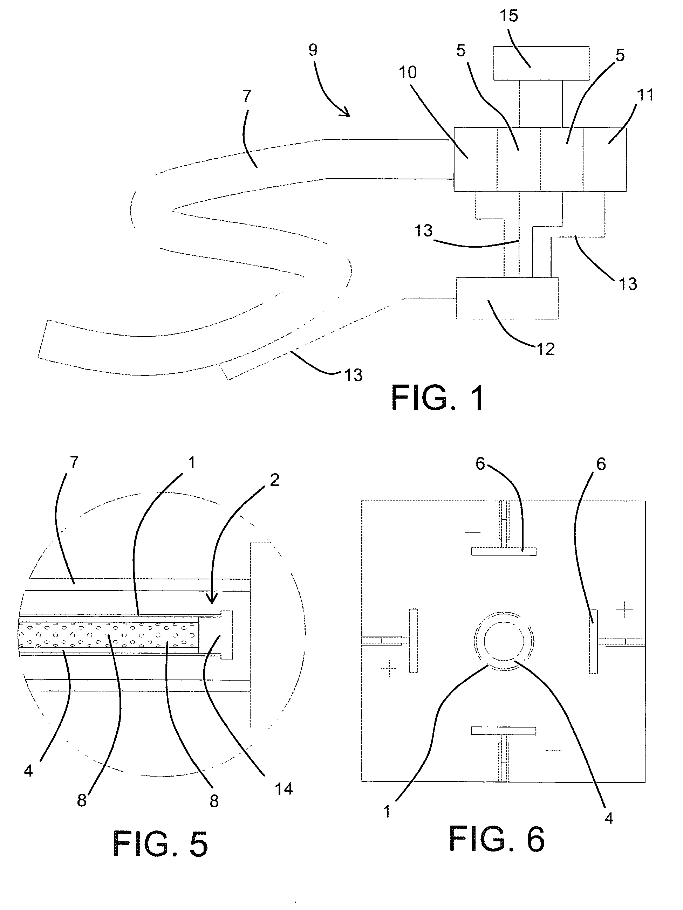

Advantageously, each plasma treatment unit 5 used is equipped with a plurality (two or more) of electrodes 6 arranged radially around the direction of feed of the liner 1, as is schematically illustrated in Figure 6 which shows four electrodes 6.

Liner 1 feeding (schematically illustrated by the sequence of Figures from 2 to 4) lasts until its entire surface to be treated has passed through the one or more treatment units 5.

Obviously, during the entire feeding step, the plasma treatment units 5 are kept activated in such a way as to treat the entire lateral surface of the liner 1.

A further fundamental aspect of this invention is the fact that during the entire treatment the vacuum is created (more or less strong depending on requirements) both in the one or more plasma treatment units 5 and in the liner 1.

It should be noticed that on one hand the creation of the vacuum in the liner 1 is intended to prevent the presence of air pockets which could result in swelling (or even explosion) of the liner 1 when they are inside the one or more treatment units 5, and on the other hand the presence of the core 4 prevents liner 1 implosion when the pressure in the liner is lower than the external pressure.

In the preferred embodiment of the method according to this invention, before the step of feeding the liner 1 through the one or more plasma treatment units 5, the liner 1 is inserted in a first containment chamber 7 which is operatively coupled to the one or more plasma treatment units 5, upstream of them with reference to the direction of feed of the liner 1. In this case, at least for the entire duration of the treatment, the vacuum is also created in the first containment chamber 7 which, preferably, is kept in fluid communication with the inside of the treatment units 5.

The step of inserting the core 4 in the liner 1 make take place, without distinction, either before or after any insertion of the liner 1 in the first containment chamber 7.

If the spaces available for implementing the method according to this invention are insufficient for the use of a first containment chamber 7 axially aligned with the direction of feed of the liner 1 inside the treatment units 5 (the chamber must be at least as long as the longest liner 1 to be treated), this invention also comprises the possibility of using a first containment chamber 7 having a tubular shape and which is also flexible. Advantageously, as illustrated in the accompanying drawings, the first containment chamber 7 may be a simple tube which is dosed at one end. However, preferably, the first containment chamber 7 has a flexibility which is less than or equal to that of the liner 1, to prevent excessive bending of the chamber from causing a deformation of the liner 1.

It should also be noticed that in the case of use of a flexible first containment chamber 7, it is also necessary to use a semi-rigid inner core 4 which is flexible (preferably at least as much as the first chamber itself) but not collapsible on itself.

Moreover, the preferred embodiment comprises use of a hollow core 4 equipped with a plurality of radial holes 8 which can put in fluid communication the inside of the hollow core and the inside of the liner 1, thus guaranteeing the uniform creation of the vacuum in the liner 1 (see Figure 5).

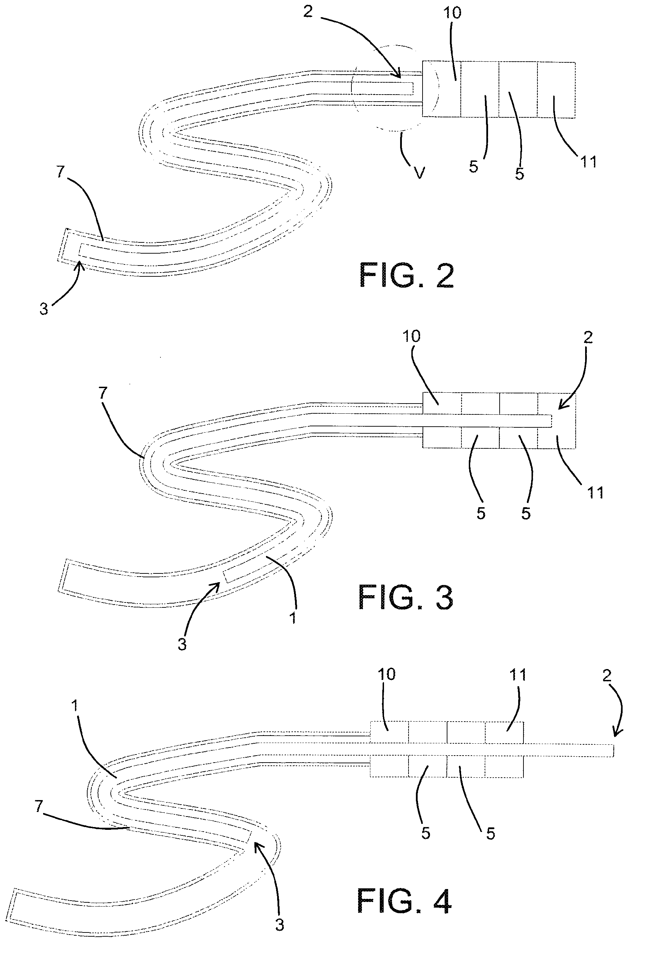

Once the liner 1 has passed through the final treatment unit 5, the method may comprise it either being fed out towards the outside environment (as is schematically indicated in Figure 4) or it being inserted in a second containment chamber (not illustrated).

Obviously, in the first case, the vacuum seal must be guaranteed. Consequently, on one hand suitable sealing means must be used (of the known type and therefore not illustrated) to prevent the external air from entering the treatment units 5, and on the other hand, for the entire duration of the treatment, the first end 2 of the liner 1 is kept plugged, as shown in Figure 5 (plug 14). In contrast, the other end 3 is kept open.

In the second case, if the vacuum is also created in the second containment chamber, there are no problems. Otherwise, the same measures required in the case in which the liner 1 comes out into the outside environment apply. Regarding the structure of the second containment chamber, the same consideration as were indicated above relative to the first containment chamber 7 apply.

As regards the plasma treatment units 5, advantageously the method may comprise using units 5 equipped with electrodes 6 whose position can be adjusted radially relative to the direction of feed of the liner 1. Moreover, in the preferred embodiment, each plasma treatment unit 5 is equipped with four electrodes 6 which are evenly distributed around the direction of feed of the liner 1 and which have alternate polarity (Figure 6).

The rest of the structure and the operating modes of the plasma treatment units 5 are of the known type and therefore are not described.

As already indicated, this invention also relates to an apparatus 9 for the surface treatment of collapsible tubular liners which are intended for the production of multi-layer tubes, substantially able to apply the method described above.

The apparatus 9 comprises at least a rigid or semi-rigid core 4 which can be inserted in a liner 1 to be treated, one or more plasma treatment units 5 through which the liner 1 to be treated can be fed, means for feeding the liner 1 through the one or more plasma treatment units 5 in a direction of feed; and means for creating the vacuum at least in the one or more plasma treatment units 5 and in the liner 1

In the embodiment illustrated, the apparatus 9 comprises two central treatment units 5 in which the stronger vacuum is created, preceded and followed respectively by a pre-chamber 10 and a post-chamber 11 which are only for transit and which are designed to facilitate maintenance of the vacuum in the treatment units 5.

The above considerations relating to the method also apply regarding the structure of the core 4 and of the treatment units 5.

The means for creating the vacuum comprise a pump 12 connected to the various parts of the apparatus 9 by a plurality of ducts 13.

The feed means (not illustrated) may comprise any device normally used for feeding tubes (such as rollers rotating in opposite directions, etc.).

In the preferred embodiments, the apparatus 9 also comprises at least one first containment chamber 7 which is operatively coupled to the one or more plasma treatment units 5, upstream of said units with reference to the direction of feed of the liner 1. The considerations already set out relative to the method also apply for the first chamber.

Depending on requirements, the apparatus 9 may or may not also comprise a second containment chamber of the type described above.

All operation of the apparatus is controlled by an electronic control unit 15. This invention brings important advantages.

In particular, this invention allowed the provision of a method and an apparatus for the surface treatment of collapsible tubular liners which are intended for the production of multi-layer tubes, which allow an increase in the capacity of the surface of the liner to adhere to other materials, without the risks of deforming the liner and without the use of toxic or polluting substances.

Finally, it should be noticed that this invention is relatively easy to produce and that even the cost linked to implementing the invention is not very high. The invention described above may be modified and adapted in several ways without thereby departing from the scope of the inventive concept, which is defined by the appended claims.

## Claims

1. A method for the surface treatment of collapsible tubular liners which are intended for the production of multi-layer tubes, wherein it comprises the operating steps of:
taking a collapsible tubular liner (1) made of at least partly fluorinated material;
inserting in the liner (1) a rigid or semi-rigid core (4) which is substantially shaped to match the liner;
with the core (4) inserted into the liner (1), feeding the liner (1) axially, in a direction of feed extending through one or more plasma treatment units (5) each equipped with a plurality of electrodes (6) arranged radially around the direction of feed, starting with its first end (2) until its entire surface to be treated has passed through said one or more treatment units (5), at the same time keeping the one or more treatment units active for plasma treatment of the surface of the liner (1) and creating a vacuum in both the one or more plasma treatment units (5) and the liner (1).

2. The method according to claim 1, **characterised in that** before the step of feeding the liner (1) through the one or more plasma treatment units (5) there is a step of inserting the liner (1) in a first containment chamber (7) operatively coupled to the one or more plasma treatment units (5), upstream of the units with reference to the direction of feed of the liner (1), and also being **characterised in that** at least for the entire duration of the treatment the vacuum is also created in the first containment chamber (7).

3. The method according to claim 1 or 2, **characterised in that** after passing through said one or more plasma treatment units (5), the liner (1) is fed out towards the outside environment, and also being **characterised in that** for the entire duration of the treatment the first end (2) of the liner (1) is kept plugged, the other end in contrast being open.

4. The method according to claim 1 or 2, **characterised in that** after passing through the one or more plasma treatment units (5), the liner (1) is inserted in a second containment chamber in which the vacuum is created at least for the entire duration of the treatment.

5. The method according to any of the foregoing claims, **characterised in that** the step of inserting the core (4) comprises insertion of a hollow core (4) equipped with a plurality of radial holes (8) which put the inside of the core in fluid communication with the inside of the liner (1).

6. The method according to any of the foregoing claims, **characterised in that** the step of inserting the core (4) in the liner (1) comprises insertion of a flexible and non-collapsible core (4) in the liner (1).

7. The method according to claim 6, **characterised in that** the step of inserting the liner (1) in the first containment chamber (7) comprises insertion of the liner in a flexible tubular chamber.

8. The method according to any of the foregoing claims, **characterised in that** the step of passing through one or more plasma treatment units (5) is carried out through one or more plasma treatment units (5) which are equipped with electrodes (6) whose positions are radially adjustable relative to the direction of feed of the liner (1).

9. The method according to any of the foregoing claims, **characterised in that** the step of passing through the one or more plasma treatment units (5) is carried out through one or more plasma treatment units (5) which are each equipped with four electrodes (6) evenly distributed around the direction of feed of the liner (1) and having alternating polarity.

10. An apparatus for the surface treatment of collapsible tubular liners which are intended for the production of multi-layer tubes, wherein it comprises:
at least a rigid or semi-rigid core (4) which can be inserted in a liner (1) to be treated;
one or more plasma treatment units (5) through which the liner (1) to be treated can be fed with the core (4) inserted into the liner (1);
means for feeding the liner (1) with the core (4) inserted into it through the one or more plasma treatment units (5) in a direction of feed; and
means for creating a vacuum in both the one or more plasma treatment units (5) and in the liner (1), when the core (4) is inserted into the liner (1).

11. The apparatus according to claim 10, **characterised in that** it also comprises at least a first containment chamber (7) operatively coupled to the one or more plasma treatment units (5), upstream of the units with reference to the direction of feed of the liner (1), and also being **characterised in that** the means for creating the vacuum also create the vacuum in the first containment chamber (7).

12. The apparatus according to claim 10 or 11, **characterised in that** the core (4) is hollow and is equipped with a plurality of radial holes (8) which, in practice, put the inside of the core in fluid communication with the inside of the liner (1).

13. The apparatus according to any of the claims from 10 to 12, **characterised in that** the core (4) is flexible and is not collapsible.

14. The apparatus according to claim 10, **characterised in that** the first containment chamber (7) is a flexible tubular chamber.

15. The apparatus according to any of the claims from 10 to 14, **characterised in that** the one or more plasma treatment units (5) are equipped with electrodes (6) whose positions are radially adjustable relative to the direction of feed of the liner (1).

16. The apparatus according to any of the claims from 10 to 15, **characterised in that** the one or more plasma treatment units (5) are each equipped with four electrodes (6) evenly distributed around the direction of feed of the liner (1) and having alternating polarity.

## Patentansprüche

1. Verfahren zur Oberflächenbehandlung von zusammenklappbaren rohrförmigen Unterschichten zur Herstellung von mehrschichtigen Rohren, welches die folgenden Betriebsphasen enthält:
- Benutzen einer zusammenfaltbaren rohrförmigen Unterschicht (1) aus einem wenigstens teilweise fluoriertem Material;
- Einsetzen in die Unterschicht (1) eines starren oder halbstarren Kerns (4), welcher im wesentlichen der Unterschicht angepasst geformt ist;
- mit dem in die Unterschicht (1) eingesetzten Kern (4) die Unterschicht (1) axial in einer Vorlaufrichtung vorschieben, die sich durch eine oder mehrere Plasma-Behandlungseinheiten (5) erstreckt, jede ausgestattet mit einer Anzahl von Elektroden (6), die radial um die Vorlaufrichtung angeordnet sind, beginnend mit ihrem ersten Ende (2), damit ihre gesamte zu behandelnde Oberfläche durch die genannten eine oder mehrere Behandlungseinheiten (5) geführt wird, wobei gleichzeitig die eine oder mehrere Behandlungseinheiten zur Plasma-Behandlung der Oberfläche der Unterschicht (1) aktiv gehalten werden und ein Vakuum, sei es in der einen oder mehreren Behandlungseinheiten (5) wie auch in der Unterschicht (1), erzeugt wird.

2. Verfahren nach Patentanspruch 1, **dadurch gekennzeichnet, dass** vor der Vorlaufphase der Unterschicht (1) durch eine oder mehrere Plasma-Behandlungseinheiten (5) eine Phase des Einsetzens der Unterschicht (1) in eine erste Aufnahmekammer (7) vorgesehen ist, im Betrieb verbunden mit einer oder mehreren Plasma-Behandlungseinheiten (5), und zwar stromaufwärts der Einheiten unter Bezugnahme auf die Vorlaufrichtung der Unterschicht (1), und ebenfalls **dadurch gekennzeichnet, dass** wenigstens während der gesamten Behandlungsdauer das Vakuum auch in der ersten Aufnahmekammer (7) erzeugt wird.

3. Verfahren nach Patentanspruch 1 oder 2, **dadurch gekennzeichnet, dass** nach dem Durchlaufen durch die genannten eine oder mehrere Plasma-Behandlungseinheiten (5) die Unterschicht (1) in den Aussenbereich geleitet wird, und ebenfalls **dadurch gekennzeichnet, dass** für die gesamte Dauer der Behandlung das erste Ende (2) der Unterschicht (1) verschlossen gehalten wird, während das andere Ende dagegen offen ist.

4. Verfahren nach Patentanspruch 1 oder 2, **dadurch gekennzeichnet, dass** nach dem Durchlaufen durch die eine oder mehrere Plasma-Behandlungseinheiten (5) die Unterschicht (1) in eine zweite Aufnahmekammer geleitet wird, in welcher das Vakuum wenigstens für die gesamte Behandlungsdauer erzeugt wird.

5. Verfahren nach einem jeden der vorstehenden Patentansprüche, **dadurch gekennzeichnet, dass** die Phase des Einsetzens des Kerns (4) das Einsetzen eines hohlen Kerns (4) enthält, versehen mit einer Anzahl von radialen Bohrungen (8), welche das Innere des Kerns mit der Innenseite der Unterschicht (1) in Fliessverbindung bringen.

6. Verfahren nach einem jeden der vorstehenden Patentansprüche, **dadurch gekennzeichnet, dass** die Phase des Einsetzens des Kerns (4) in die Unterschicht (1) das Einsetzen eines flexiblen und nicht zusammenfaltbaren Kerns (4) in die Unterschicht (1) enthält.

7. Verfahren nach Patentanspruch 6, **dadurch gekennzeichnet, dass** die Phase des Einsetzens der Unterschicht (1) in die erste Aufnahmekammer (7) das Einsetzen der Unterschicht in eine flexible rohrförmige Kammer enthält.

8. Verfahren nach einem jeden der vorstehenden Patentansprüche, **dadurch gekennzeichnet, dass** die Phase des Durchlaufens durch eine oder mehrere Plasma-Behandlungseinheiten (5) mit Hilfe einer oder mehrerer Plasma-Behandlungseinheiten (5) ausgeführt wird, welche mit Elektroden (6) ausgestattet sind, deren Positionen im Verhältnis zu der Vorlaufrichtung der Unterschicht (1) radial einstellbar sind.

9. Verfahren nach einem jeden der vorstehenden Patentansprüche, **dadurch gekennzeichnet, dass** die Phase des Durchlaufens durch eine oder mehrere Plasma-Behandlungseinheiten (5) mit Hilfe einer oder mehrerer Plasma-Behandlungseinheiten (5) ausgeführt wird, welche mit vier Elektroden (6) ausgestattet sind, gleichmässig verteilt um die Vorlaufrichtung der Unterschicht (1) und abwechselnde Polaritäten aufweisend.

10. Vorrichtung zur Oberflächenbehandlung von zusammenklappbaren rohrförmigen Unterschichten zur Herstellung von mehrschichtigen Rohren, welche wie folgt enthält:
- wenigstens einen starren oder halbstarren Kern (4), welcher in eine zu behandelnde Unterschicht (1) eingesetzt werden kann;
- eine oder mehrere Plasma-Behandlungseinheiten (5), durch welche die zu behandelnde Unterschicht (1) zusammen mit dem in die Unterschicht (1) eingesetzten Kern (4) geführt werden kann;
- Mittel zum Vorlaufen der Unterschicht (1) mit dem in diese eingesetzten Kern (4) durch die eine oder mehrere Plasma-Behandlungseinheiten (5) in einer Vorlaufrichtung; und
- Mittel zum Erzeugen eines Vakuums in der einen oder mehreren Plasma-Behandlungseinheiten (5) wie auch in der Unterschicht (1), wenn der Kern (4) in die Unterschicht (1) eingesetzt ist.

11. Vorrichtung nach Patentanspruch 10, **dadurch gekennzeichnet, dass** sie ebenfalls wenigstens eine Aufnahmekammer (7) enthält, die betrieblich an die eine oder mehrere Plasma-Behandlungseinheiten (5) angeschlossen ist, und zwar stromaufwärts der Einheiten unter Bezugnahme auf die Vorlaufrichtung der Unterschicht (1), und auch **dadurch gekennzeichnet, dass** die Mittel zum Erzeugen des Vakuums auch das Vakuum in der ersten Aufnahmekammer (7) herstellen.

12. Vorrichtung nach Patentanspruch 10 oder 11, **dadurch gekennzeichnet, dass** der Kern (4) hohl und mit einer Anzahl von radialen Bohrungen (8) versehen ist, welche praktisch das Innere des Kerns mit der Innenseite der Unterschicht (1) in Fliessverbindung bringen.

13. Vorrichtung nach einem jeden der Patentansprüche von 10 bis 12, **dadurch gekennzeichnet, dass** der Kern (4) flexibel und nicht zusammenfaltbar ist.

14. Vorrichtung nach Patentanspruch 10, **dadurch gekennzeichnet, dass** die erste Aufnahmekammer (7) eine flexible rohrförmige Kammer ist.

15. Vorrichtung nach eine jeden der Patentansprüche von 10 bis 14, **dadurch gekennzeichnet, dass** die eine oder mehrere Plasma-Behandlungseinheiten (5) mit Elektroden (6) ausgestattet sind, deren Positionen im Verhältnis zu der Vorlaufrichtung der Unterschicht (1) radial einstellbar sind.

16. Vorrichtung nach einem jeden der Patentansprüche von 10 bis 15, **dadurch gekennzeichnet, dass** die eine oder mehrere Plasma-Behandlungseinheiten (5) jede mit vier Elektroden (6) ausgestattet sind, gleichmässig verteilt um die Vorlaufrichtung der Unterschicht (1) und abwechselnde Polaritäten aufweisen.

## Revendications

1. Un procédé pour le traitement de surface de sous-couches tubulaires pliables qui sont destinées à la production de tubes à plusieurs couches, **caractérisé en ce qu'**il comprend les phases opérationnelles consistant à :
prendre une sous-couche tubulaire pliable (1) réalisée dans un matériau au moins en partie fluoré ;
introduire dans la sous-couche (1) une âme (4) rigide ou semi-rigide qui a une forme essentiellement complémentaire à celle de la sous-couche ;
avec l'âme (4) introduite dans la sous-couche (1), faire avancer la sous-couche (1) axialement, dans une direction d'avance s'étendant à travers une ou plusieurs unités de traitement au plasma (5) équipées, chacune, d'une pluralité d'électrodes (6) disposées radialement autour de ladite direction d'avance, à partir de sa première extrémité (2) jusqu'à ce que toute sa surface à traiter soit passée à travers ladite une ou lesdites plusieurs unités de traitement (5), tout en maintenant ladite une ou lesdites plusieurs unités de traitement actives pour le traitement au plasma de la surface de la sous-couche (1) et en générant un vide à la fois dans ladite une ou lesdites plusieurs unités de traitement au plasma (5) et dans la sous-couche (1).

2. Le procédé selon la revendication 1, **caractérisé en ce que**, avant la phase d'avance de la sous-couche (1) à travers ladite une ou lesdites plusieurs unités de traitement au plasma (5), il y a une phase d'introduction de la sous-couche (1) dans une première chambre de confinement (7) opérationnellement accouplée avec ladite une ou lesdites plusieurs unités de traitement au plasma (5), en amont desdites unités en se référant à la direction d'avance de la sous-couche (1), et étant également **caractérisé en ce qu'**au moins pendant toute la durée du traitement, le vide est également généré dans la première chambre de confinement (7).

3. Le procédé selon la revendication 1 ou 2, **caractérisé en ce qu'**après être passé à travers ladite une ou lesdites plusieurs unités de traitement au plasma (5), la sous-couche (1) est amenée à sortir vers l'environnement extérieur, et étant également **caractérisé en ce que** pendant toute la durée du traitement la première extrémité (2) de la sous-couche (1) est maintenue bouchée, l'autre extrémité étant en revanche ouverte.

4. Le procédé selon la revendication 1 ou 2, **caractérisé en ce qu'**après être passé à travers ladite une ou lesdites plusieurs unités de traitement au plasma (5), la sous-couche (1) est introduite dans une deuxième chambre de confinement dans laquelle le vide est généré au moins pour toute la durée du traitement.

5. Le procédé selon l'une quelconque des revendications précédentes, **caractérisé en ce que** la phase d'introduction de l'âme (4) comprend l'introduction d'une âme creuse (4) pourvue d'une pluralité de trous radiaux (8) qui mettent l'intérieur de l'âme en communication de fluide avec l'intérieur de la sous-couche (1).

6. Le procédé selon l'une quelconque des revendications précédentes, **caractérisé en ce que** la phase d'introduction de l'âme (4) dans la sous-couche (1) comprend l'introduction d'une âme flexible et non-pliable (4) dans la sous-couche (1).

7. Le procédé selon la revendication 6, **caractérisé en ce que** la phase d'introduction de la sous-couche (1) dans la première chambre de confinement (7) comprend l'introduction de la sous-couche dans une chambre tubulaire flexible.

8. Le procédé selon l'une quelconque des revendications précédentes, **caractérisé en ce que** la phase de passage à travers une ou plusieurs unités de traitement au plasma (5) est effectuée à travers une ou plusieurs unités de traitement au plasma (5) qui sont équipées d'électrodes (6) dont les positions sont réglables radialement par rapport à la direction d'avance de la sous-couche (1).

9. Le procédé selon l'une quelconque des revendications précédentes, **caractérisé en ce que** la phase de passage à travers ladite une ou lesdites plusieurs unités de traitement au plasma (5) est effectuée à travers une ou plusieurs unités de traitement au plasma (5) qui sont équipées, chacune, de quatre électrodes (6) uniformément réparties autour de la direction d'avance de la sous-couche (1) et ayant une polarité alternée.

10. Un appareil pour le traitement de surface de sous-couches tubulaires pliables qui sont destinées à la production de tubes à plusieurs couches, **caractérisé en ce qu'**il comprend :
au moins une âme (4) rigide ou semi-rigide qui peut être introduite dans une sous-couche (1) à traiter ;
une ou plusieurs unités de traitement au plasma (5) à travers lesquelles la sous-couche (1) à traiter peut être amenée à avancer avec l'âme (4) introduite dans la sous-couche (1) ;
des moyens pour faire avancer la sous-couche (1), avec l'âme (4) introduite à l'intérieur, à travers ladite une ou lesdites plusieurs unités de traitement au plasma (5) dans une direction d'avance ;
et
des moyens pour générer un vide, lorsque l'âme (4) est introduite dans la sous-couche (1), à la fois dans ladite une ou lesdites plusieurs unités de traitement au plasma (5) et dans la sous-couche (1).

11. L'appareil selon la revendication 10, **caractérisé en ce qu'**il comprend aussi au moins une première chambre de confinement (7) opérationnellement accouplée avec ladite une ou lesdites plusieurs unités de traitement au plasma (5), en amont desdites unités en se référant à la direction d'avance de la sous-couche (1), et étant également **caractérisé en ce que** les moyens pour générer le vide génèrent aussi le vide dans la première chambre de confinement (7).

12. L'appareil selon la revendication 10 ou 11, **caractérisé en ce que** l'âme (4) est creuse et est pourvue d'une pluralité de trous radiaux (8) qui, dans la pratique, mettent l'intérieur de l'âme en communication de fluide avec l'intérieur de la sous-couche (1).

13. L'appareil selon l'une quelconque des revendications de 10 à 12, **caractérisé en ce que** l'âme (4) est flexible et n'est pas pliable.

14. L'appareil selon la revendication 10, **caractérisé en ce que** la première chambre de confinement (7) est une chambre tubulaire flexible.

15. L'appareil selon l'une quelconque des revendications de 10 à 14, **caractérisé en ce que** ladite une ou lesdites plusieurs unités de traitement au plasma (5) sont équipées d'électrodes (6) dont les positions sont réglables radialement par rapport à la direction d'avance de la sous-couche (1).

16. L'appareil selon l'une quelconque des revendications de 10 à 15, **caractérisé en ce que** ladite une ou lesdites plusieurs unités de traitement au plasma (5) sont équipées, chacune, de quatre électrodes (6) uniformément réparties autour de la direction d'avance de la sous-couche (1) et ayant une polarité alternée.
